# EUROPÄISCHE PATENTANMELDUNG

(11) **EP 1 126 270 A2**
(43) Veröffentlichungstag der Anmeldung: **22.08.2001**
(21) Anmeldenummer: 01103848.6
(22) Anmeldetag: 16.02.2001
(51) Int. Cl.: G01N 21/41

(54) **Brechungsindexdetektor für die Kapillarelektrophorese**

(30) Priorität: 19.02.2000 DE 10007749
(71) Anmelder: Nanolit GmbH, 09130 Chemnitz (DE)
(72) Erfinder: Labazau, Aliaksandr, Dr., 220007 Minsk (BY); Popkovich, Gennady, 220107 Minsk (BY)
(74) Vertreter: Findeisen, Andreas

(57) **Zusammenfassung**

Die Erfindung betrifft einen Brechungsindexdetektor für die Kapillarelektrophorese, bestehend aus einer Lichtquelle, einer, mit einer Kapillare zu verbindenden optischen Zelle und einer photoelektrischen Auswerteeinrichtung, wobei die optische Zelle in Betriebsstellung im Strahlengang zwischen der Lichtquelle und der photoelektrischen Auswerteeinrichtung angeordnet wird und wobei diese optische Zelle einen, mit der Kapillare in Wirkverbindung bringbaren Durchgangskanal aufweist, in dem die zu analysierenden Substanzen geführt werden. Es wird die Aufgabe gelöst, einen Detektor zu schaffen, mit dem breite Substanzklassen bei einer gleichzeitig hohen Empfindlichkeit und Auflösung sowie einem niedrigen Rauschniveau detektiert werden können. Dies wird möglich, indem die optische Zelle (4) aus mehreren Segmenten unter Bildung eines Durchgangskanals (4') mit dreieckigem Querschnitt zusammengefügt ist, wobei der Durchgangskanal (4') zumindest im Bereich der Durchstrahlung geradlinig ausgestaltet und rechtwinklig zum auftreffenden Lichtstrahl angeordnet ist.

## Beschreibung

Die Erfindung betrifft einen Brechungsindexdetektor für die Kapillarelektrophorese, bestehend aus einer Lichtquelle, einer, mit einer Kapillare zu verbindenden optischen Zelle und einer photoelektrischen Auswerteeinrichtung, wobei die optische Zelle in Betriebsstellung im Strahlengang zwischen der Lichtquelle und der photoelektrischen Auswerteeinrichtung angeordnet wird und wobei diese optische Zelle einen, mit der Kapillare in Wirkverbindung bringbaren Durchgangskanal aufweist, in dem die zu analysierenden Substanzen geführt werden.

Die Refraktometrie ist ein Verfahren zur Brechungsindexmessung, das in Verbindung mit chromatographischer Mischungstrennung zur chemischen Lösungsanalyse eingesetzt wird. Grundsätzlich ändern alle gelösten Substanzen den Brechungsindex einer Lösung. Ein Brechungsindexdetektor wird daher als praktisch universeller Detektor in der konventionellen Chromatographie eingesetzt. Eine der Schwächen der Brechungsindexdetektoren in der konventionellen Chromatographie ist aber deren geringe Empfindlichkeit.

Die Kapillarelektrophorese ist ein Trennungsverfahren, in dem, ähnlich wie in der Chromatographie, die Lösungskomponenten in einer Kapillare getrennt werden. Da für die Kapillarelektrophorese sehr kleine Volumina und Mengen charakteristisch sind, kommen andere Merkmale der Detektionsverfahren als in der konventionellen Chromatographie ins Spiel. Die optische Absorptionsdetektion oder Photometrie, die in der Kapillarelektrophorese als praktisch universeller Detektor meistens eingesetzt wird, ist mengenabhängig, d.h., dass bei einer bestimmten Konzentration in elektrophoretisch getrennten Zonen das Absorptionssignal vom optischen Weg des Meßstrahls in der Zone abhängig ist. Dies führt zu einem Kompromiß zwischen Empfindlichkeit und Auflösung bei der Absorptionsdetektion in der Kapillarelektrophorese. Hingegen ist bei der Brechungsindexdetektion das Signal nur von der Zonenkonzentration abhängig, weil eine Strahlenbrechung nur auf der Grenze mit der zu analysierenden Lösung stattfindet. Bei einer vorteilhaften Anordnung kann es eine mindestens vergleichbare Empfindlichkeit wie in anderen Detektionsverfahren unter Beibehaltung der für die Kapillarelektrophorese charakteristischen, hohen Auflösung ergeben. Dieser Vorteil wurde aber bisher nicht in einer Anordnung verwirklicht.

Eine Erhöhung der Empfindlichkeit photometrischer Detektoren kann grundsätzlich erzielt werden, indem ein größerer optischer Weg realisiert wird. Dies wird möglich durch Anwendung einer technischen Lösung, die von der Firma Perkin-Elmer Corporation als eine "High Sensitivity Optical Cell for the Model 270 Capillary Electrophoresis Systems" beschrieben worden ist. Hierbei ist eine Lichtquelle vorgesehen, deren Lichtstrahl zunächst durch eine fokussierende Linse und nachfolgend über die Kapillare mit der zu analysierenden Substanz auf eine Photodiode geführt wird. Die Kontur der Kapillare wird im Bereich des auftreffenden Lichtstrahls jedoch verändert. Durch ein zusätzliches Bauteil bzw. durch eine veränderte geometrische Ausgestaltung der Kapillare wird der Strömungsweg der zu analysierenden Substanzen verändert. Dieser Abschnitt wirkt demzufolge als Meßzelle, welche die zu analysierende Substanz über eine Teilstrecke von etwa 3 mm in Richtung des Lichtstrahls führt. Die Substanz wird also nicht lediglich im sehr kleinen Querschnittsweg der Kapillare durchstrahlt, sondern auf einer Weglänge von 3 mm. Durch den somit größeren optischen Weg wird die Empfindlichkeit verbessert. Allerdings ergibt sich durch diese Ausgestaltung ein Detektionsvolumen von mehr als 10 Nanolitern, das eine Verminderung der Auflösung bewirkt. Außerdem können weitere Meßfehler entstehen, weil an der Umlenkstelle zwischen der Kapillare und dem als Meßzelle wirksamen Abschnitt eine erneute Vermischung der getrennten Komponenten nicht ausgeschlossen werden kann.

Eine weitere Vorrichtung zur Anwendung der Brechungsindexdetektoren in der Kapillarelektrophorese wurde von TARIGAN, NEILL, KENMORE und BORNHOP in der Zeitschrift "ANALYTICAL CHEMISTRY" 1996 / Jahrgang 68, Heft 10, Seiten 1762 - 1770 beschrieben. Gemäß der Veröffentlichung wird die Kapillare als optische Zelle genutzt, der in an sich bekannter Weise eine Lichtquelle und eine Photodiode als Registrierelement zugeordnet sind. Es wird jedoch keine konventionelle Lichtquelle eingesetzt, sondern ein Laser, dessen Strahl die Kapillare mit Brechung an der Grenze zwischen dem Quarzmaterial der Kapillare und der zu analysierenden Flüssigkeit passiert. Infolge von Instabilitäten der Laserlichtquellen und Messung indirekter Größen (Interferenz) wird allerdings keine hohe Empfindlichkeit erreicht.

Aufgabe der Erfindung ist es, einen in konventioneller Meßanordnung ausgestalteten Brechungsindexdetektor, mit dem eine direkte Brechungswinkelmessung möglich ist, für die Kapillarelektrophorese zu schaffen, mit dem breite Substanzklassen bei einer gleichzeitig hohen Empfindlichkeit und Auflösung sowie einem niedrigen Rauschniveau detektiert werden können. Der Detektor soll zum Erreichen dieser Zielstellung insbesondere ein sehr kleines Detektionsvolumen aufweisen, vorzugsweise kleiner als ein Nanoliter. Weiterhin soll eine solche geometrische Kontur geschaffen werden, die ein erneutes Vermischen der getrennten Substanzbestandteile am Übergang von Kapillare und Detektor unterbindet.

Diese Aufgabe wird mit den Merkmalen gemäß Patentanspruch 1 gelöst, wobei weitere vorteilhafte Ausgestaltungen in den Ansprüchen 2 bis 10 beschrieben sind.

Durch Anwendung des erfindungsgemäßen Brechungsindexdetektors für die Kapillarelektrophorese können breite Substanzklassen detektiert werden. Ein wesentlicher Vorteil ist das sehr kleine Detektionsvolumen von weniger als einem Nanoliter. Mit dieser technischen Lösung wird eine hohe Empfindlichkeit und Auflösung sowie ein niedriges Rauschniveau gewährleistet.

Ein Ausführungsbeispiel der Erfindung ist in der Zeichnung dargestellt und wird nachfolgend beschrieben. Es zeigen:
- Fig. 1: den grundsätzlichen Aufbau einer Meßanordnung unter Verwendung des erfindungsgemäßen Brechungsindexdetektors in Draufsicht
- Fig. 2: die Anordnung gemäß Fig. 1 in perspektivischer Ansicht
- Fig. 3: mit dem Brechungsindexdetektor erzielte Ergebnisse bei der quantitativen Bestimmung von Aminosäuren
- Fig. 4: mit dem Brechungsindexdetektor erzielte Ergebnisse bei der quantitativen Bestimmung von Zuckern

Die in der Zeichnung dargestellte Anordnung zeigt optisch gekoppelt und nacheinander angeordnet eine Lichtquelle 1, ein Teleskop 2, einen Wendespiegel 3, eine optische Zelle 4, einen Einstellspiegel 5 und eine Photodiode 6.

Als Lichtquelle 1 wird eine Lichtdiode 1 verwendet, die auf einem Germaniumkristall ausgeführt ist. Die strahlende Fläche, die mit der Planartechnologie hergestellt wird, hat einen Durchmesser zwischen 5 und 30 µm. Diese kleine strahlende Fläche ermöglicht eine gute Fokussierbarkeit.

Das Teleskop 2 besteht aus drei Linsen 2'; 2''; 2''', die entsprechend positiv, neutral und positiv sind. Der Wendespiegel 3 ist ein 100%-Aluminiumspiegel, der unter einem Winkel von 45° eingestellt ist.

Die optische Zelle 4 ist aus mehreren, in der Zeichnung nicht als Einzelteil erkennbaren Segmenten zusammengefügt. Die Segmente weisen eine hochpolierte Oberfläche auf. Demzufolge können diese Segmente ohne jegliche zusätzliche Stoffe zusammengefügt werden. Ihre Verbindung untereinander wird lediglich durch tiefenoptischen Kontakt erreicht. Die Segmente werden zur optischen Zelle 4 derart zusammengefügt, dass ein Durchgangskanal 4' mit dreieckigem Querschnitt gebildet wird. Für die Funktionsfähigkeit ist es wesentlich, dass der Durchgangskanal 4' zumindest im Bereich der Durchstrahlung geradlinig ausgestaltet und rechtwinklig zum auftreffenden Lichtstrahl angeordnet ist. Vorzugsweise wird dieser Durchgangskanal 4' als gleichseitiges Dreieck mit einer Seitenlänge von jeweils 100 µm ausgestaltet. Für die räumliche Anordnung des Durchgangskanals 4' in der optischen Zelle 4 ist vorgesehen, dass eine Grundseite des Dreiecks parallel zu jener Seitenfläche der optischen Zelle 4 verläuft, die parallel zum auftreffenden Lichtstrahl angeordnet ist.

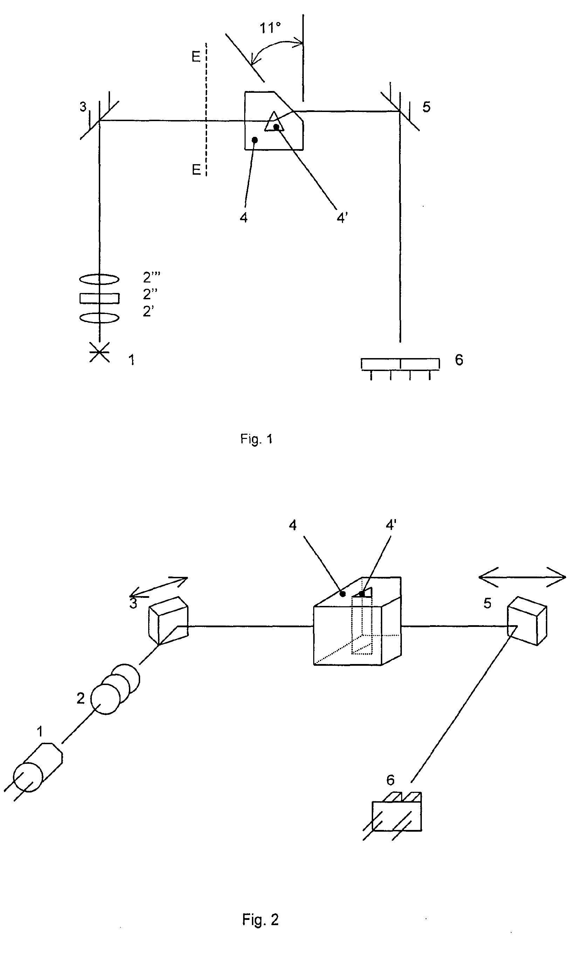

Die Seitenfläche der optischen Zelle 4, an welcher der Lichtstrahl in die optische Zelle 4 eintritt, verläuft in Richtung einer fiktiven, zum auftreffenden Lichtstrahl rechtwinkligen Ebene "E". Hingegen verläuft die Seitenfläche der optischen Zelle 4, an welcher der Lichtstrahl nach Brechung an den Seitenflächen des Durchgangskanals 4' aus der optischen Zelle 4 austritt, in einem Winkel gegenüber dieser fiktiven rechtwinkligen Ebene "E". Dieser Winkel wird vorgesehen, um die Ablenkung des Strahles aus der ursprünglichen Richtung teilweise zu kompensieren. Dieser Winkel beträgt, wie auch in Fig. 1 dargestellt, vorzugsweise 11°.

Im Strahlengang ist nach der optischen Zelle 4 der Einstellspiegel 5 angeordnet, der gleiche Eigenschaften wie der Wendespiegel 3 aufweist. Der Einstellspiegel 5 ist mechanisch verstellbar in Richtung des auftreffenden Lichtstrahls. Die Photodiode 6 ist eine zweiflächige Photodiode 6, die auf einem Siliciumkristall ausgeführt ist.

Die dargestellte Anordnung hat folgende Funktionsweise: Die bereits getrennten Komponenten der zu analysierenden Substanzmischung werden vom nicht näher dargestellten Ausgang der Kapillare in den dreieckförmigen Durchgangskanal 4' der optischen Zelle 4 geführt. Die Strahlung der Lichtdiode 1 wird durch das Teleskop 2 mit dem Wendespiegel 3 auf den Durchgangskanal 4' der optischen Zelle 4 fokussiert. Nach der Brechung auf den Seitenflächen des Durchgangskanals 4' auf einen Winkel, der vom Brechungsindex der Substanz in dem Durchgangskanal 4' abhängig ist und der Rückbrechung an der Grenze zwischen der optischen Zelle 4 und der umgebenden Luft gelangt der Strahl auf den Einstellspiegel 5. Entsprechend dem jeweils verwendeten Lösungsmittel wird das Nullsignal der zweiflächigen Photodiode 6 so balanciert, dass die Lichtenergie gleichmäßig zwischen den beiden Photoflächen dieser Photodiode 6 verteilt wird. Sobald die getrennten Komponenten der zu analysierenden Substanzmischung den Durchgangskanal 4' der optischen Zelle 4 passieren, wird das Nullsignal proportional dem Brechungsindex oder der Konzentration der zu analysierenden Substanz debalanciert. Die erhaltenen Ergebnisse werden entweder in einem zugeordneten Speicher gespeichert oder durch einen Schreiber aufgezeichnet.

Mit dem vorgeschlagenen Brechungsindexdetektor für die Kapillarelektrophorese wurden bereits erste praktische Versuche durchgeführt. Hierbei wurde die optische Zelle 4 aus optischem Glas K-8 in den Abmessungen 10 mm x 10 mm x 10 mm hergestellt. Der dreieckige Querschnitt des Durchgangskanals 4' ist etwa 0,004 mm² groß. Die Brennweite des als Teleskop 2 ausgestalteten Linsensystems beträgt bis zur Achse des Durchgangskanals 4' 70 mm. Der Lichtstrahl hat im Brennpunkt einen Durchmesser von 0,06 mm. Durch diese konstruktive Ausgestaltung wird ein Detektionsvolumen erreicht, das tatsächlich kleiner als ein Nanoliter ist. Somit ist gewährleistet, dass die hohe Auflösung der elektrophoretischen Trennungsmethode erhalten bleibt. Die Photodiode 6 hat beim Versuchsmuster zwei photoempfindliche Flächen mit einer Kantenlänge von jeweils 5 mm x 5 mm, wobei der Abstand zwischen diesen Flächen 200 µm beträgt.

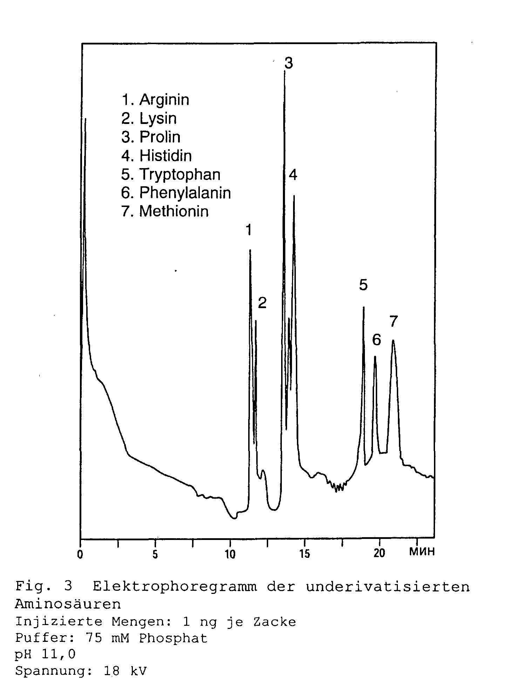

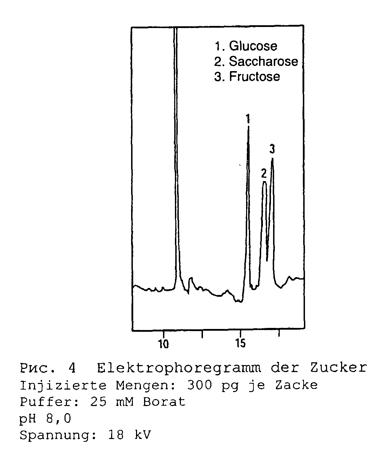

Mit dem beschriebenen Brechungsindexdetektor wurden ausgezeichnete Ergebnisse bei der quantitativen Bestimmung getrennter Mischungen von underivatisierten Aminosäuren bzw. Zuckern erreicht. Die entsprechenden Ergebnisse sind aus den Fig. 3 und 4 ersichtlich. Bezüglich Fig. 3 ist anzumerken, dass underivatisierte Aminosäuren mit den bisher bekannten Detektoren nicht oder nur mit extrem hohem Aufwand detektiert werden konnten. In Fig. 4 ist bemerkenswert, dass hier gleichzeitig drei verschiedene Zucker mit sehr guter Empfindlichkeit detektiert worden sind.

## Patentansprüche

1. Brechungsindexdetektor für die Kapillarelektrophorese, bestehend aus einer Lichtquelle, einer, mit einer Kapillare zu verbindenden optischen Zelle und einer photoelektrischen Auswerteeinrichtung, wobei die optische Zelle in Betriebsstellung im Strahlengang zwischen der Lichtquelle und der photoelektrischen Auswerteeinrichtung angeordnet wird und wobei diese optische Zelle einen, mit der Kapillare in Wirkverbindung bringbaren Durchgangskanal aufweist, in dem die zu analysierenden Substanzen geführt werden,
dadurch gekennzeichnet,
dass die optische Zelle (4) aus mehreren Segmenten unter Bildung eines Durchgangskanals (4') mit dreieckigem Querschnitt zusammengefügt ist, wobei der Durchgangskanal (4') zumindest im Bereich der Durchstrahlung geradlinig ausgestaltet und rechtwinklig zum auftreffenden Lichtstrahl angeordnet ist.

2. Brechungsindexdetektor nach Anspruch 1,
dadurch gekennzeichnet,
dass die Seitenfläche der optischen Zelle (4), an welcher der Lichtstrahl in die optische Zelle (4) eintritt, in Richtung einer, zum auftreffenden Lichtstrahl rechtwinkligen Ebene (E) verläuft.

3. Brechungsindexdetektor nach den Ansprüchen 1 und 2,
dadurch gekennzeichnet,
dass die Seitenfläche der optischen Zelle (4), an welcher der Lichtstrahl nach Brechung an den Seitenflächen des Durchgangskanals (4') aus der optischen Zelle (4) austritt, in einem Winkel gegenüber einer, zum auftreffenden Lichtstrahl rechtwinkligen Ebene (E) verläuft.

4. Brechungsindexdetektor nach den Ansprüchen 1 bis 3,
dadurch gekennzeichnet,
dass der Winkel zwischen der Seitenfläche der optischen Zelle (4), an welcher der Lichtstrahl nach Brechung an der Seitenfläche des Durchgangskanals (4') aus der optischen Zelle (4) austritt und der zum auftreffenden Lichtstrahl rechtwinkligen Ebene (E) 11° beträgt.

5. Brechungsindexdetektor nach den Ansprüchen 1 bis 3,
dadurch gekennzeichnet,
dass eine Grundseite des, den Durchgangskanal (4') bildenden Dreiecks parallel zu der Seitenfläche der optischen Zelle (4) verläuft, die parallel zum auftreffenden Lichtstrahl angeordnet ist.

6. Brechungsindexdetektor nach Anspruch 1,
dadurch gekennzeichnet,
dass die Segmente der optischen Zelle (4) an ihren Verbindungsflächen eine hochpolierte Oberfläche aufweisen und durch tiefenoptischen Kontakt miteinander verbindbar sind.

7. Brechungsindexdetektor nach Anspruch 1,
dadurch gekennzeichnet,
dass das, den Durchgangskanal (4') bildende Dreieck ein gleichseitiges Dreieck ist.

8. Brechungsindexdetektor nach Anspruch 1,
dadurch gekennzeichnet,
dass die Lichtquelle (1) als Lichtdiode (1) ausgestaltet ist.

9. Brechungsindexdetektor nach den Ansprüchen 1 und 8,
dadurch gekennzeichnet,
dass zwischen der Lichtdiode (1) und der optischen Zelle (4) ein, aus drei separaten Linsen (2'; 2''; 2''') bestehendes Teleskop (2) angeordnet ist.

10. Brechungsindexdetektor nach Anspruch 1,
dadurch gekennzeichnet,
dass die photoelektrische Auswerteeinrichtung (6) als eine zweiflächige Photodiode (6) ausgestaltet ist.
